# EUROPÄISCHE PATENTSCHRIFT

(11) **EP 0 452 376 B1**
(45) Veröffentlichungstag und Bekanntmachung des Hinweises auf die Patenterteilung: **02.06.1993**
(21) Anmeldenummer: 90901575.2
(22) Anmeldetag: 05.01.1990
(51) Int. Cl.: B29B 9/00, B29C 47/78

(54) **VORRICHTUNG ZUM ABKÜHLEN, TROCKNEN UND GRANULIEREN VON STRÄNGEN**
DEVICE FOR COOLING, DRYING AND GRANULATING STRANDS
DISPOSITIF DE REFROIDISSEMENT, DE SECHAGE ET DE GRANULATION DE CORDONS

(30) Priorität: 05.01.1989 DE 3900250
(43) Veröffentlichungstag der Anmeldung: 23.10.1991
(73) Patentinhaber: Rieter Automatik GmbH, D-63757 Grossostheim (DE)
(72) Erfinder: NOGOSSEK, Alfred, W-8700 Würzburg (DE); KEILERT, Jürgen, W-8751 Kleinwallstadt (DE)
(74) Vertreter: Bardehle, Heinz, Dipl.-Ing.
(86) Internationale Anmeldenummer: EP9000025
(87) Internationale Veröffentlichungsnummer: WO9007408

(56) Entgegenhaltungen:
- WO-A-88/06960
- DE-A- 2 218 210
- DE-C- 3 205 052
- DE-C- 3 336 032
- FR-A- 2 284 420
- US-A- 4 025 252

## Beschreibung

Die Erfindung bezieht sich auf eine Vorrichtung zum Abkühlen, Trocknen und Granulieren von schmelzflüssig aus Düsen austretenden Strängen z.B. aus thermoplastischen Kunststoffen mit einer mit ihrem oberen Ende unter den Düsen angeordneten Ablaufrinne, einer auf der Ablaufrinne einen Kühlflüssigkeitsstrom erzeugenden Einrichtung, einen der Ablaufrinne nachgeordneten Granulator und mit einer vor dem Granulator angeordneten Entwässerungsstrecke, in der die Stränge auf einer mit Durchlässen für den freien Durchtritt der Kühlflüssigkeit versehenen Unterlage aufliegen.

Eine derartige Vorrichtung ist aus der DE-PS 33 36 032 bekannt. Bei dieser Vorrichtung besteht die Entwässerungsstrecke aus zwei Zonen, von denen die in Ablaufrichtung erste Zone zu einem Wasserablauf führt und die zweite Zone mit einem Luftstrom beaufschlagt ist, durch den an den Strängen verbliebenes Wasser weitgehend abgesogen wird. Diese beiden Zonen der Entwässerungsstrecke sind praktisch unmittelbar vor dem Granulator angeordnet.

Der Erfindung liegt die Aufgabe zugrunde, die vorstehend beschriebene, bekannte Vorrichtung hinsichtlich ihrer Trocknungswirksamkeit weiterhin zu verbessern und gleichzeitig der Vorrichtung besonders gute Selbsteinfädelungseigenschaften zu geben.

Erfindungsgemäß geschieht dies dadurch, daß die Ablaufrinne im Bereich nach der Entwässerungsstrecke in ihrem Boden mit Eintrittsdüsen für einen Fluidstrom versehen ist, der die Stränge gegenüber dem Boden weitgehend reibungsfrei entlang der Ablaufrinne in den an ihrem unteren Ende angeordneten Granulator mit einem die sofortige Weiterverarbeitung ermöglichenden Trocknungsgrad leitet.

Durch die Einschaltung des Bereichs der den Fluidstrom leitenden Eintrittsdüsen zwischen die Entwässerungsstrecke und den Granulator ergeben sich in kombinatorischer Wirkung zwei Effekte. Einerseits werden die Stränge so weit getrocknet, daß diese von dem Granulator mit einem die sofortige Weiterverarbeitung ermöglichenden Trocknungsgrad verarbeitet werden, d.h. das erzeugte Granulat bedarf keines nachfolgenden Trocknungsvorganges. Der Fluidstrom sorgt dabei für eine gegenüber dem Boden weitgehend reibungsfrei erfolgende Führung der Stränge, was wegen des fehlenden Wassers, das bei seiner Anwesenheit gewissermaßen als Schmiermittel wirkt, besonders bedeutsam ist. Dabei sorgt die weitgehend reibungsfreie Führung der Stränge im Bereich der Eintrittsdüsen dafür, daß die von der Schwerkraft bzw. dem Kühlflüssigkeitsstrom vorwärtsgeschobenen Stränge automatisch die Tendenz der Selbsteinfädelung erhalten, der sonst bei Fehlen von Kühlflüssigkeit im Bereich vor dem Granulator vermindert wird.

Die Tendenz zur Selbsteinfädelung kann man dadurch noch verstärken, daß man den Eintrittsdüsen eine Neigung in Bewegungsrichtung der Stränge gibt.

Für den Fluidstrom verwendet man zweckmäßig einen Gas- insbesondere Luftstrom. Es ist auch möglich, ein inertes Gas, insbesondere Stickstoff, zu verwenden, das häufig in chemischen Betrieben als Nebenprodukt anfällt.

Um besonders feuchtigkeitsempfindliche Stoffe verarbeiten zu können, gibt man vorteilhaft dem Gasstrom ein pulverförmiges Trocknungsmittel bei. Ein solches Trocknungsmittel hat meist darüber hinaus noch die Wirkung, Verklebungen der Stränge zu verhindern. Falls ein solches Trocknungsmittel im Falle seiner Haftung an dem erzeugten Granulat für dessen Weiterverarbeitung unerwünscht ist, kann man zwischen dem Granulator und dem Bereich der den Fluidstrom leitenden Eintrittsdüsen die Ablaufrinne mit zu einem Absaugeschacht führenden Perforationen versehen. Ein durch den Absaugeschacht und die Perforationen angesaugter Luftstrom nimmt dann das pulverförmige Trocknungsmittel von den Strängen weg, so daß die Stränge weitgehend frei von dem Trocknungsmittel in den Granulator gelangen.

Um die Vorschubwirkung der eine Neigung besitzenden Eintrittsdüsen zu erhöhen, kann man vorteilhaft im Bereich der Eintrittsdüsen oberhalb der Ablaufrinne Vorschubdüsen für das Anblasen der Stränge mit einem Fluidstrom in Bewegungsrichtung der Stränge vorsehen. Für diesen Fluidstrom verwendet man zweckmäßig das gleiche Medium wie für den durch die Eintrittsdüsen geleiteten Fluidstrom. Diese zusätzlichen Vorschubdüsen erhöhen auch die Tendenz der Selbsteinfädelung. Dies ist dann von besonderem Vorteil , wenn die im Boden der Ablaufrinne vorgesehenen Eintrittsdüsen senkrecht durch den Boden hindurchtreten.

Um eine Anpassung der Vorrichtung an unterschiedliche Trocknungsund Kühlungsbedürfnisse herbeizuführen, kann man den Bereich der den Fluidstrom leitenden Eintrittsdüsen und/oder den Bereich vor der Entwässerungsstrecke längenverstellbar ausbilden. Hierfür eignet sich vor allem eine teleskopartige Gestaltung der betreffenden Bereiche. Auf diese Weise ist es möglich, z.B. eine besonders lange, den Kühlflüssigkeitsstrom führende Strecke mit einer verkürzten Länge des Bereichs mit den Eintrittsdüsen für den Fluidstrom zu kombinieren.

Um besondere Trocknungs-, Kühl- oder Erwärmungseffekte zu erzielen, kann man den bzw. die Fluidströme entsprechend temperieren. So ist es beispielsweise wünschenswert, faserverstärkte Kunststoffstränge durch den Fluidstrom zu erwärmen, um hierdurch den Granulator zu entlasten. Umgekehrt ist es für das Granulieren von elastischen Strängen vorteilhaft, diese vor dem Granulieren zu kühlen, da in diesem Falle ein besseres Granulat erzielt wird.

In den Figuren sind Ausführungsbeispiele der Erfindung dargestellt. Es zeigen:
- Fig. 1: in prinzipieller Darstellung die Vorrichtung mit geneigter Ablaufrinne in Seitensicht,
- Fig. 2: die Vorrichtung mit horizontaler, längenverstellbarer Ablaufrinne.

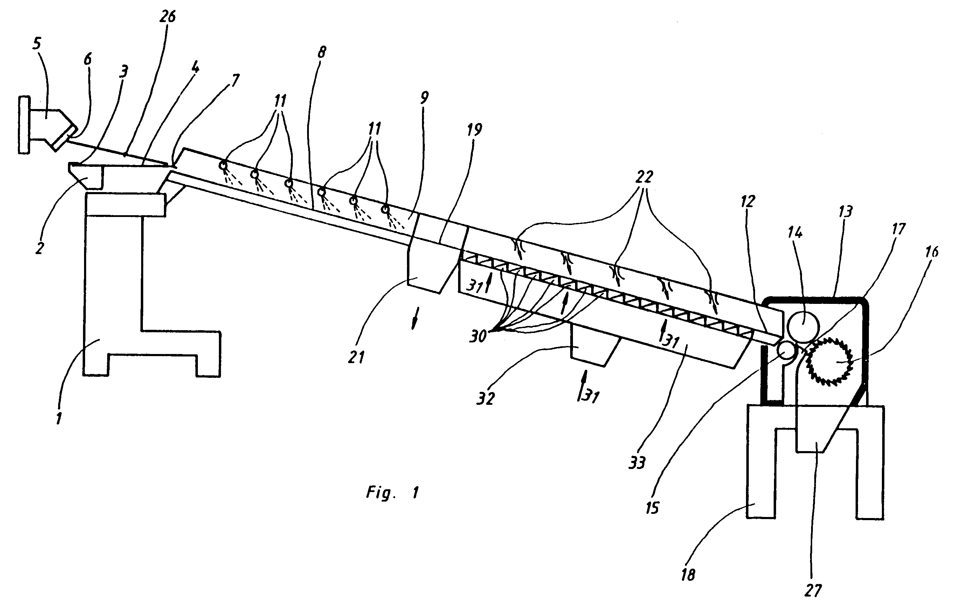

Die in der Fig. 1 dargestellte Vorrichtung enthält das Gestell 1, auf dem der Wasserkasten 2 befestigt ist, dem in bekannter Weise Wasser zugeführt wird, das hier als Kühlflüssigkeit dient. Die Kühlflüssigkeit strömt aus der Schlitzdüse 3 auf den Ablauftisch 4 und über diesen nach rechts hin als ein Wasserfilm, der auf den Ablauftisch 4 auftreffende Stränge 26 eines extrudierbaren Materials, hier eines thermoplastischen Kunststoffs, mitnimmt. Oberhalb des Ablauftischs 4 ist das Düsenpaket 5 angeordnet, von dem eine Düse 6 dargestellt ist. Dem Düsenpaket 5 wird in bekannter Weise thermoplastischer Kunststoff schmelzflüssig zugeführt und aus der Düse 6 ausgepreßt. Die Gestaltung eines derartigen Düsenpakets ist bekannt. Dementsprechend liegen bei der in Fig. 1 dargestellten Vorrichtung mehrere Düsen 6 auf einer Linie nebeneinander.

Aus den Düsen 6 austretende Stränge 26 fallen zunächst auf den Ablauftisch 4 und werden von dem den Ablauftisch 4 überströmenden Wasserfilm mitgenommen, bis sie über das Ende 7 des Ablauftischs 4 zur Ablaufrinne 8 gelangen, auf der sie in etwa paralleler Anordnung herabgleiten. Die Ablaufrinne 8 wird in dem Gehäuse 9 gehalten, das sich mit seiner linken Seite über den Ausleger 10 auf dem Gestell 1 abstützt. Im Gehäuse 9 sind sechs Kühlwasser-Sprühdüsen 11 angeordnet, die, falls erforderlich, zusätzlich Kühlflüssigkeit, also insbesondere Wasser, auf die Ablaufrinne 8 sprühen und damit den auf die Kunststoffstränge ausgeübten Kühleffekt erhöhen. Die Ablaufrinne 8 leitet mit ihrem unteren Ende 12 die über sie herabgleitenden Kunststoffstränge 26 dem Granulator 13 zu, der die beiden Einzugswalzen 14 und 15 sowie die Messerwalze 16 enthält. Die Messerwalze 16 arbeitet gegen das gleichzeitig als Zuführtisch dienende Gegenmesser 17. Dieser konstruktive Aufbau eines Granulators ist für sich bekannt. Der Granulator 13 ist auf dem Ständer 18 montiert.

Die Ablaufrinne 8 ist vor ihrem unteren Ende 12 mit dicht benachbarten Eintrittsdüsen für einen Fluidstrom versehen, der hier durch die Pfeile 31 angedeutet ist. Dieser Fluidstrom wird durch den Schacht 32 in den Kasten 33 geführt, der sich unterhalb des Bereichs der Ablaufrinne 8 mit den Eintrittsdüsen 30 befindet. Als Fluidstrom wird hier ein Luftstrom verwendet, der die über diesen Bereich der Ablaufrinne 8 geführten Kunststoffstränge 26 umspült und vom Boden der Ablaufrinne 8 derart abhebt, daß die Kunststoffstränge 26 weitgehend reibungsfrei geführt werden. Hierfür sind die Eintrittsdüsen 30 in entsprechender Dichte vorgesehen.

Zwischen dem Bereich der Ablaufrinne 8 mit den Kühlmittelsprühdüsen 11 und dem Bereich mit den Eintrittsdüsen 30 ist die Entwässerungsstrecke 19 vorgesehen, unterhalb der der Wasserablauf 21 angeordnet ist. Die Entwässerungsstrecke 19 besteht aus einem Sieb, das hier den Boden der Ablaufrinne 8 bildet. Durch dieses Sieb im Bereich der Entwässerungsstrecke 19 läuft das am oberen Ende der Ablaufrinne 8 zugeführte Kühlwasser weitgehend ab.

Der Bereich der Ablaufrinne 8 mit den Eintrittsdüsen 30 erhält auf diese Weise gekühlte Kunststoffstränge 26, die weitgehend vom Kühlwasser befreit sind. Durch den von den Eintrittsdüsen 30 geleiteten Luftstrom wird nun von den Kunststoffsträngen 26 Restwasser gewissermaßen abgeschleudert, so daß aufgrund der Länge des Bereiches mit den Eintrittsdüsen 30 die Stränge dem Granulator 13 mit einem die sofortige Weiterverarbeitung ermöglichenden Trocknungsgrad zugeführt werden. Das von dem Granulator 13 erzeugte Granulat fällt dann mit diesem Trocknungsgrad durch den Ausfallschacht 27 zur weiteren Verarbeitung heraus.

Die Eintrittsdüsen 30 werden hier durch schräg aufwärts verlaufende Schlitz- bzw. Lochdüsen gebildet, die durch die Sägezahn-Darstellung in Fig. 1 angedeutet werden. Derartige schlitzdüsen sind bekannt. Es sei jedoch darauf hingewiesen, daß auch senkrecht durch den Boden dler Ablaufrinne 8 hindurchtretende Eintrittsdüsen verwendet werden können, die dann allerdings nicht dem von ihnen geleiteten Luftstrom die Tendenz geben, fördernd auf die herabgeführten Kunststoffstränge 26 zu wirken. Eine solche zusätzliche Förderwirkung kann man durch die Anordnung von oberhalb der Eintrittsdüsen 30 angeordnete Vorschubdüsen 22 erzielen, die einen Fluidstrom, hier ebenfalls ein Luftstrom, schräg abwärts auf die herabgeführten Kunststoffstränge 26 richten.

Die in der Fig. 1 dargestellte Vorrichtung besitzt eine ausgeprägte Tendenz zur selbsteinfädelung, was beim Anfahren der Vorrichtung und auch bei möglichem Bruch oder,Abreißen von Kunststoffsträngen von Bedeutung ist. Da im Bereich der Eintrittsdüsen 30 die Kunststoffstränge praktisch reibungsfrei längs der Ablaufrinne 8 geführt werden, sorgt das Nachschieben der Kunststoffstränge 26 aufgrund der Vorschubwirkung des Kühlwassers automatisch dafür, daß die Kunststoffstränge unbehindert in den Granulator 13 gelangen. Diese Tendenz der Selbsteinfädelung wird durch geneigte Eintrittsdüsen 30 und auch durch die Vorschubdüsen 22 weiterhin verstärkt.

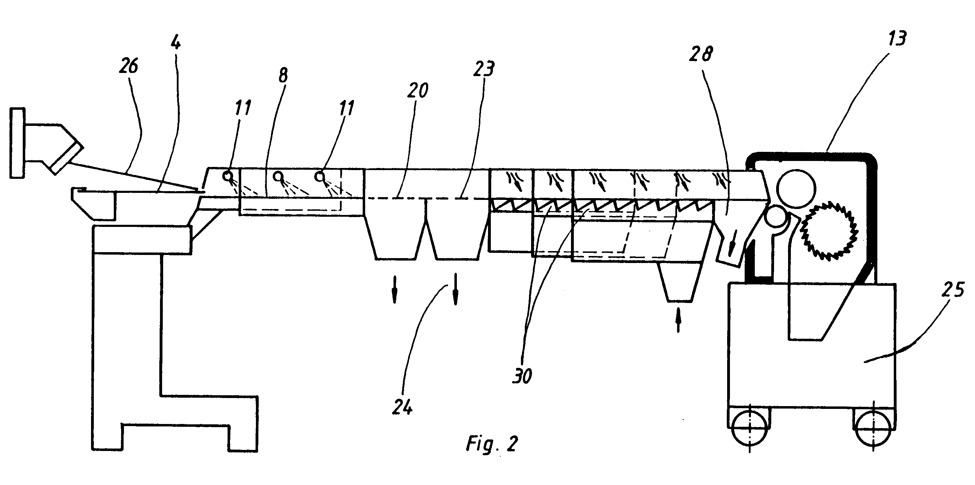

Bei dem in der Fig. 2 dargestellten Ausführungsbeispiel handelt es sich um eine Abwandlung der Vorrichtung gemäß Fig. 1. Die Vorrichtung ist mit einer horizontal gerichteten Ablaufrinne 8 versehen. Trotz dieser horizontalen Richtung der Ablaufrinne 8 ist es möglich, mit ihr die Kunststoffstränge 26 selbsteinfädelnd in den Granulator 13 zu transportieren, da einerseits durch den über den Ablauftisch 4 geleiteten Kühlwasserstrom und andererseits durch die Wirkung der Sprühdüsen 11 eine ausgeprägte Vorschubwirkung auf die Kunststoffstränge 26 ausgeübt wird. Da in dem relativ langen Bereich mit den Eintrittsdüsen 30 eine Reibung der Kunststoffstränge 26 gegenüber dem Boden der Ablaufrinne 8 aufgrund des dort durchströmenden Luftstromes praktisch vermieden ist, sorgt der den Kunststoffsträngen 26 im Bereich hinter dem Ablauftisch 4 gegebene Vorschub dafür, die Kunststoffstränge 26 sicher in den Granulator 13 zu transportieren.

Bei der Vorrichtung gemäß Fig. 2 ist weiterhin die Entwässerungsstrecke (Bezugszeichen 19 in Fig. 1) in zwei Zonen aufgeteilt, nämlich die Zone 20 für den Ablauf des Kühlwassers und die Zone 23, durch die ein Luftstrom in Richtung des eingezeichneten Pfeils 24 geführt wird. Dieser Luftstrom nimmt einen wesentlichen Teil des an den Kunststoffsträngen verbliebenen Restwassers mit, so daß in den Bereich der Ablaufrinne 8 mit den Eintrittsdüsen 30 Kunststoffstränge gelangen, die weitgehend vom Wasser befreit sind.

Die Ablaufrinne 8 ist hier sowohl in ihrem Bereich hinter dem Ablauftisch 4 als auch im Bereich der Eintrittsdüsen 30 längenverstellbar ausgebildet, was durch die Teleskopgestaltung dieser Bereiche angedeutet ist. Diese beiden Bereiche können somit ineinander eingeschoben als auch auseinander herausgezogen werden, wodurch eine optimale Anpassung an die jeweils geforderten Verfahrensbedingungen ermöglicht wird. Diese Verfahrensbedingungen hängen insbesondere von dem jeweils zu verarbeitenden Kunststoff ab.

Um die Längenveränderung der Ablaufrinne 8 im Bereich des Granulators 13 ausgleichen zu können, ist der Granulator 13 auf dem Wagen 25 angeordnet, der entsprechend Verlängerung bzw. Verkürzung der Ablaufrinne 8 um eine entsprechende Länge mitfährt.

Bei der in der Fig. 2 dargestellten Vorrichtung ist unmittelbar vor dem Granulator 13 am Boden der Ablaufrinne 8 ein Absaugeschacht 28 angeordnet, der ähnlich der Absaugung im Bereich 23 wirkt. Dementsprechend ist der Boden der Ablaufrinne 8 hier als Sieb ausgebildet. Die Absaugung erfolgt hier in Richtung des eingezeichneten Pfeiles. Die Anordnung dieses Absaugeschachtes 28 ist dann sinnvoll, wenn dem durch die Eintrittsdüsen 30 zugeführten Luftstrom ein pulverförmiges Trocknungsmittel, z.B. Talkum, beigegeben wird, das vor dem Granulieren entfernt werden soll. Das Trocknungsmittel kann auf diese Weise im Bereich der Eintrittsdüsen 30 zunächst seine Wirkung entfalten. Soweit es an den Strängen 26 dann noch haftet, wird es über den Absaugeschacht 28 weitgehend entfernt.

## Patentansprüche

1. Vorrichtung zum Abkühlen, Trocknen und Granulieren von schmelzflüssig aus Düsen (6) austretenden Strängen (26) aus Kuntstoffen mit einer mit ihrem oberen Ende (7) unter den Düsen (6) angeordneten Ablaufrinne (8), einer auf der Ablaufrinne (8) einen Kühlflüssigkeitsstrom erzeugenden Einrichtung (2), einen der Ablaufrinne (8) nachgeordneten Granulator (13) und mit einer vor dem Granulator (13) angeordneten Entwässerungsstrecke (19), in der die Stränge (26) auf einer mit Durchlässen für den freien Durchtritt der Kühlflüssigkeit versehenen Unterlagen aufliegen, **dadurch gekennzeichnet**, daß die Ablaufrinne (8) im Bereich nach der Entwässerungsstrecke (19) in ihrem Boden mit Eintrittsdüsen (30) für einen Fluidstrom versehen ist, der die Stränge (26) gegenüber dem Boden weitgehend reibungsfrei entlang der Ablaufrinne (8) in den an ihrem unteren Ende (12) angeordneten Granulator (13) mit einem die sofortige Weiterverarbeitung ermöglichenden Trocknungsgrad leitet.

2. Vorrichtung nach Anspruch 1, **dadurch gekennzeichnet**, daß die Eintrittsdüsen (30) eine Neigung in Bewegungsrichtung der Stränge (26) aufweisen.

3. Vorrichtung nach Anspruch 1 oder 2, **dadurch gekennzeichnet**, daß der Fluidstrom aus einem Gas-, insbesondere Luftstrom besteht.

4. Vorrichtung nach Anspruch 3, dadurch gekennzeichnet, daß dem Gasstrom ein pulverförmiges Trocknungsmittel beigefügt ist.

5. Vorrichtung nach einem der Ansprüche 1 bis 4, dadurch gekennzeichnet, daß zwischen dem Granulator (13) und dem Bereich der den Fluidstrom leitenden Eintrittsdüsen (30) die Ablaufrinne (8) mit zu einem Absaugschacht (28) führenden Perforationen versehen ist.

6. Vorrichtung nach einem der Ansprüche 1 bis 5, dadurch gekennzeichnet, daß im Bereich der Eintrittsdüsen (30) oberhalb der Ablaufrinne (8) Vorschubdüsen (22) für das Anblasen der Stränge (26) mit einem Fluidstrom in Bewegungsrichtung der Stränge (26) vorgesehen sind.

7. Vorrichtung nach einem der Ansprüche 1 bis 6, dadurch gekennzeichnet, daß der Bereich der den Fluidstrom leitenden Eintrittsdüsen (30) und/oder der Bereich vor der Entwässerungsstrecke (20,23) längenverstellbar ausgebildet ist.

8. Vorrichtung nach einem der Ansprüche 1 bis 7, dadurch gekennzeichnet, daß der bzw. die Fluidströme temperiert sind.

## Claims

1. Device for cooling, drying and granulating strands (26) of plastics emerging from nozzles (6) in a molten state, comprising an outlet channel (8) the upper end (7) of which is arranged below the nozzles (6), an apparatus (2) producing a flow of cooling liquid over the outlet channel (8), a granulator (13) arranged downstream of the outlet channel (8) and a dehydrating section (19) arranged in front of the granulator (13), in which the strands (26) lie on a support provided with openings for the free passage of the cooling liquid, characterised in that the region of the outlet channel (8) following the dehydrating section (19) is provided in its base with inlet nozzles (30) for a fluid flow which guides the strands (26) along the outlet channel (8) with virtually no friction with respect to the base into the granulator (13) arranged at its lower end (12) with a degree of dryness such that they can immediately undergo further processing.

2. Device according to claim 1, characterised in that the inlet nozzles (30) are inclined in the direction of movement of the strands (26).

3. Device according to claim 1 or claim 2, characterised in that the fluid flow consists of a gas flow, especially an air flow.

4. Device according to claim 3, characterised in that a pulverulent drying agent is added to the gas flow.

5. Device according to one of claims 1 to 4, characterised in that the outlet channel (8) is provided with perforations leading to a discharge shaft (28) between the granulator (13) and the region of the inlet nozzles (30) guiding the fluid flow.

6. Device according to one of claims 1 to 5, characterised in that feed nozzles (22) for blowing a fluid flow over the strands (26) in the direction of movement of the strands (26) is provided in the region of the inlet nozzles (30) above the outlet channel (8).

7. Device according to one of claims 1 to 6, characterised in that the region of the inlet nozzles (30) guiding the fluid flow and/or the region in front of the dehydrating section (20, 23) is longitudinally adjustable.

8. Device according to one of claims 1 to 7, characterised in that the temperature of the fluid flow or flows is controlled.

## Revendications

1. Dispositif pour refroidir, sécher et granuler des boudins (26) de matières plastiques qui sortent en fusion de filières (6), avec une rigole d'écoulement (8) disposée avec son extrémité supérieure (7) en dessous des filières (6), avec un dispositif (2) produisant un flux de liquide de refroidissement sur la rigole d'écoulement (8), avec un granulateur (13) disposé à la suite de la rigole d'écoulement (8), et avec un parcours d'évacuation d'eau (19), qui est disposé avant le granulateur (13) et dans lequel les boudins (26) reposent sur des supports pourvus d'ouvertures pour le libre passage du liquide de refroidissement, **caractérisé** en ce que la rigole d'écoulement (8) est pourvue dans son fond, dans la région faisant suite au parcours d'évacuation d'eau (19), de buses d'admission (30) pour un flux de fluide, qui dirige les boudins (26) le long de la rigole d'écoulement (8), quasiment sans frottement contre le fond de la rigole, jusque dans le granulateur (13) disposé à l'extrémité inférieure (12) de la rigole, avec un degré de séchage permettant leur traitement immédiat.

2. Dispositif selon la revendication 1, **caractérisé** en ce que les buses d'admission (30) présentent une inclinaison dans la direction de déplacement des boudins (26).

3. Dispositif selon la revendication 1 ou 2, **caractérisé** en ce que le flux de fluide est un flux de gaz, notamment un flux d'air.

4. Dispositif selon la revendication 3, **caractérisé** en ce qu'on ajoute au flux de gaz un produit desséchant pulvérulent.

5. Dispositif selon l'une quelconque des revendications 1 à 4, **caractérisé** en ce que la rigole d'écoulement (8) est pourvue, entre le granulateur (13) et la région des buses d'admission (30) dirigeant le flux de fluide, de perforations menant à un puits d'évacuation par aspiration (28).

6. Dispositif selon l'une quelconque des revendications 1 à 5, **caractérisé** en ce que des buses d'avancement (22) sont prévues au-dessus de la rigole d'écoulement (8) dans la région des buses d'admission (30), afin de souffler sur les boudins un flux de fluide dans la direction de déplacement des boudins (26).

7. Dispositif selon l'une quelconque des revendications 1 à 6, **caractérisé** en ce que la région des buses d'admission (30) dirigeant le flux de fluide, et/ou la région située avant le parcours d'évacuation d'eau (20, 23), est réalisée réglable en longueur.

8. Dispositif selon l'une quelconque des revendications 1 à 7, **caractérisé** en ce que le ou les flux de fluide sont tempérés.
